# EUROPEAN PATENT SPECIFICATION

(11) **EP 3 222 589 B1**
(45) Date of publication and mention of the grant of the patent: **19.02.2020**
(21) Application number: 16162089.3
(22) Date of filing: 23.03.2016
(51) Int. Cl.: C02F 3/12

(54) **MULTI-CHAMBER BIOLOGICAL TREATMENT PLANT**
MEHRKAMMERANLAGE ZUR BIOLOGISCHEN BEHANDLUNG
INSTALLATION DE TRAITEMENT BIOLOGIQUE À CHAMBRES MULTIPLES

(43) Date of publication of application: 27.09.2017
(73) Proprietor: Oü Klaasplast, 75121 Kolu küla (EE)
(72) Inventor: ARNOVER, Andres, 75121 Kolu küla (EE)
(74) Representative: Sarap, Margus

(56) References cited:
- FR-A1- 2 261 985
- US-A- 3 907 672
- US-A- 4 021 347
- US-A- 4 070 292

## Description

### FIELD OF THE INVENTION

This invention relates to waste water treatment systems, more specifically to the field of multi-chamber horizontal biological waste water treatment plants.

### PRIOR ART

Various waste water treatment systems have been described in the art. For example, different septic tanks are widely known in which the interior of the tank has been partitioned into two or more compartments by partition walls. In these solutions, waste water is conducted to a septic tank where solid waste settles to the bottom of the tank and water is sent out of the system to the soil. This type of a two-chamber biological waste water treatment plant using aerated sedimentation has been described, for example, in European patent EP 1244604. One of the disadvantages of these well-known treatment systems is their low efficiency of treatment.

August AT-8, a biological treatment plant which is disclosed in Latvian patent No. LT5430B describes a system, where separation of solids and aeration processes take place in the several chambers of a waste water tank that are connected with each other by a pipe system. The drawback of this solution, however, is its upright cylindrical construction, which requires deeper installation depth, and the low capacity of its treatment chamber which is why they have to be emptied frequently and they cannot be used in places with larger number of users. Due to the upright construction, the installation of the system is more complicated, also the power consumption is high because for conducting water to the pipeline, a waste water pump is used. The efficiency of treatment plants is within the required norms and therefore, the efficiency is not a direct argument.

The closest prior art is disclosed in US patent US3907672A, which describes sewage treatment aerobic digestion tank buried underground. The problem of the sewage treatment tank described in US3907672A is that it accumulates the sludge in the inner corners of the chamber of the tank and therefore emptying the chamber is very complicated or not possible. The tank described in US3907672A also requires the presence of a waste water pump and therefore, consumes more energy.

### SUMMARY OF THE INVENTION

The objective of this invention is to provide a biological waste water treatment system which would be easier to install and maintain than the systems known in the art, which would have longer maintenance intervals and increased efficiency of treatment, whereas the air and power consumption required for the operation of the system would be lower.

Differently from the known solutions, this invention overcomes the problem of an increased installation depth and frequent maintenance, consuming at the same time less energy than the systems which are based on the known operating principles.

The objective of the invention will be achieved by providing a multi-chamber horizontal cylindrical tank with lower installation depth than that of the known multi-chamber vertical tanks, which makes it possible to use the biological treatment plant in the areas where the level of groundwater is higher. The integrated piping system provides better water circulation, reducing the consumption of air and power required for the operation of the plant. The invention is defined in the appended claims.

The capacity of the cylindrical horizontal multi-chamber biological treatment plant according to this invention may be increased by elongating the cylinder, which will not change the installation depth of the biological treatment plant and will not complicate the installation process.

The increased efficiency of treatment is achieved by the shape and position of partition walls and the system of purification pipes which provides an opportunity to aerate the waste water more efficiently than in the systems known in the prior art. In order to further increase the efficiency, the inner corners between the bottom of the body of the intermediate chamber and the vertical partition wall differ from those of the known treatment plants in that they are not sharp, but levelled. Consequently, differently from the known solutions, the present invention ensures a more uniform circulation of waste water, prevents accumulation of sludge in the inner corners of the chamber, and makes emptying of the chamber easier, reducing the risk of displacement of the plant while the chamber is emptied.

Because of the interior construction of the system, treated waste water flows out of the system freely. Differently from the known solutions, the treatment plant according to the present invention does not require the presence of a waste water pump and therefore, consumes less energy. The aeration system of the biological treatment plant is programmed to operate in cycles, which again reduces the daily energy consumption.

If the known solutions use upright vertical cylindrical or cubic tanks with upright, 90-degree partition walls, the biological treatment plant according to the present invention comprises horizontal cylindrical construction with a inclined, curved partition wall within the tank, whereas the height of the aeration pipe has been fixed to a certain distance from the bottom of the tank so as to increase the efficiency, instead of apertures in the partition walls provided in the known solutions for the over- and through-flow, the plant according to the present invention uses pipes which have been placed at a fixed height from the bottom of the tank, and to prevent the accumulation of sludge in the corners of the tank, the corners have been curved.

### LIST OF THE DRAWINGS

The invention will now be described in detail with reference to the Figures of the drawings, in which:

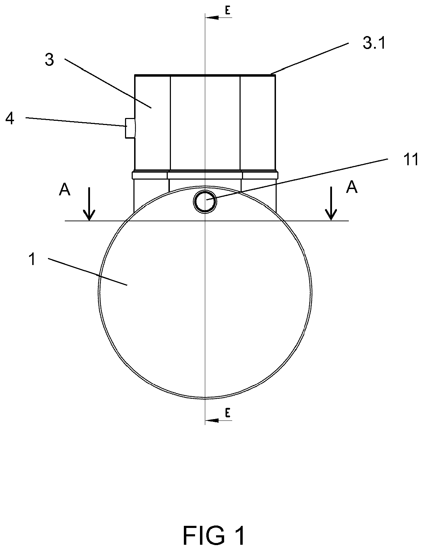

Figure 1 depicts the end view of the biological treatment plant of the invention;

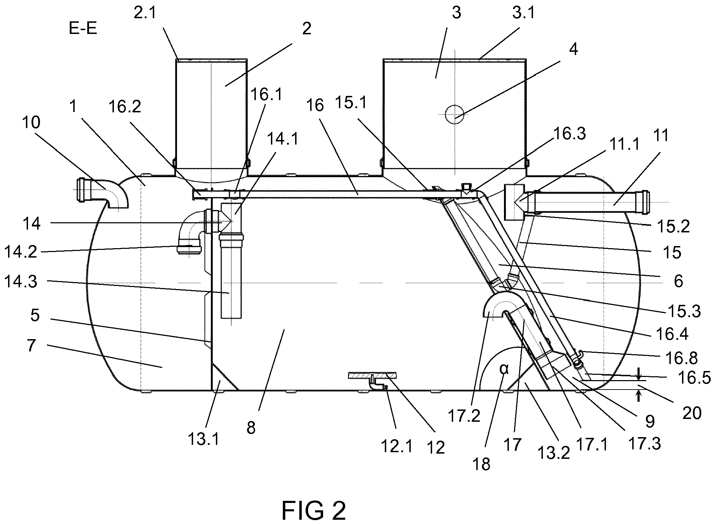

Figure 2 is the sectional view E-E of the biological treatment plant of Figure 1;

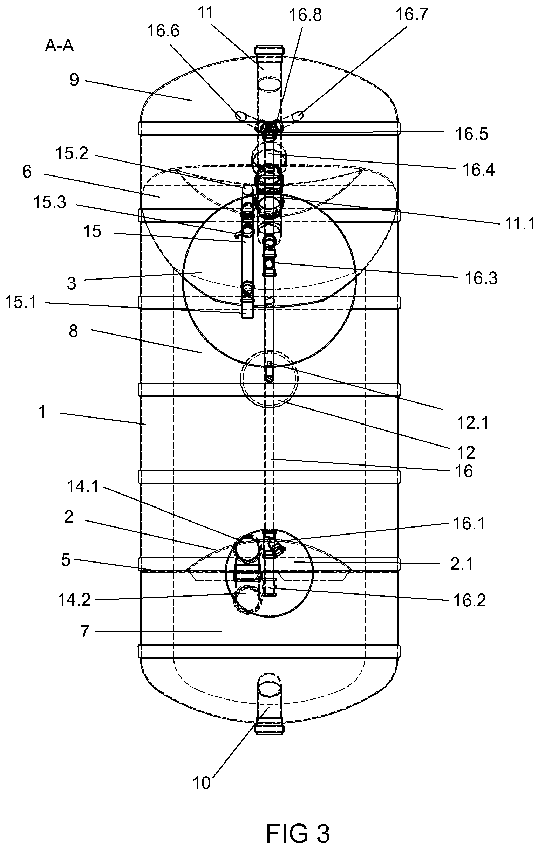

Figure 3 is the sectional view AA of the biological treatment plant of Figure 1.

### EMBODIMENT OF THE INVENTION

The biological treatment plant according to the present invention comprises a cylindrical tank 1 including a maintenance shaft 2 with a cover 2.1 and a maintenance shaft 3 with a cover 3.1 and an airway 4. The tank 1 comprises a vertical partition wall 5, a inclining funnel-shaped partition wall 6 which curves inward and which divides the tank 1 into the first chamber 7, the second chamber 8 and the third chamber 9, a system of purification pipes, an inlet 10 which extends through the body of the tank 1 into the first chamber 7, an outlet 11 which extends through the body of the tank 1 into the third chamber 9 and which has been connected with a T-piece 11.1, a diffuser 12 provided at the bottom of the chamber 8 of the tank 1 with an air inlet 12.1, and the levellings 13.1 and 13.2 provided between the bottom and the vertical wall 5 and between the bottom and the inclined curved partition wall 6. Into the diffuser 12, air is conducted through the air inlet 12.1 so as to aerate the waste water in the chamber 8 by circulating the water and to provide the oxygen-enriched environment for the waste to be degraded by bacteria.

The cylindrical horizontal construction of the biological treatment plant provides an opportunity to install the system nearer to the ground level, thus reducing the depth of the required pit, simplifying the installation and increasing the capacity of the biological treatment plant. The approximate diameter of the biological treatment plant is between 1100 mm and 1700 mm, preferably 1200 mm.

The system of purification pipes comprises a through-flow pipe 14, a U-shaped through-flow pipe 15, a sludge lift and an overflow pipe 17.

The through-flow pipe 14 for conducting water from the first or sedimentation chamber 7 to the second or the treatment chamber 8 comprises a 90-degree T-piece 14.1, an elbow 14.2 connected to the horizontal section of the said T-piece and a straight pipe 14.3 connected to the vertical section of the T-piece, and it is attached to the partition wall 5 so that one end of the elbow 14.2 extends to the first chamber 7 with its opening facing the bottom and the vertical section of the T-piece 14.1 extends to the chamber 8, while one of the openings of the vertical section faces the bottom of the tank 1 and the other opening is directed upwards.

One end 15.1 of the U-shaped through-flow pipe 15, which is provided in the chamber 9 and supported by the curved central section of the inclining partition wall 6, extends through the partition wall 6 into the chamber 8 and the other end 15.2 extends upwards towards the water level in the central section of the chamber 9, whereas an air inlet 15.3 is provided in the central section. The through-flow pipe 15 is provided in the tank 1 for sending the sludge floating on the water surface back from the chamber 9 to the chamber 8.

The sludge lift comprises a horizontal pipe 16 which at the water surface level extends through the upper sections of the three chambers, a T-piece 16.1 provided in the section near the partition wall 5, and a closed end 16.2 extending to the chamber 7, a T-piece 16.3 provided at the end that extends to the chamber 9 through the curved inclining partition wall 6, a pipe 16.4 which is substantially parallel with the partition wall 6 and connected to the T-piece 16.3 (intended also for cleaning the sludge lift), and a Y-tube 16.5 at the end of the pipe 16.4 directed to the bottom of the tank, with its arms 16.6 and 16.7 extending apart from one another and towards the bottom, and with an air inlet 16.8 for conducting sludge from the third chamber 9 back to the second chamber 8.

With the sludge lift, the sludge settled in the chamber 9 is sent through the Y-tube 16.5, then through the pipe 16.4 upwards and out of the chamber 8 through the T-piece 16.1. By pumping air into the pipe through the air inlet 16.8, a sucking effect is created in the sludge lift and the air bubbles moving upwards along the pipe 16.4 create a sucking effect at the end of the Y-tube 16.5 which carries along the settling sludge, so that the sludge moves along the pipe 16.4 up and exits the chamber 8 through the T-piece 16.1 above the water surface. The use of the described sludge lift system provides a more efficient treatment of waste water compared to the solutions known in the art.

The first arm 16.6 and the second arm 16.7 of the Y-tube 16.5 are placed at the height 20 from the bottom of the tank 1 which is within the range between 20 mm and 100 mm, preferably 40 mm to 60 mm. The described branching ensures that the sludge entering into the third chamber 9 from the water which flows from the second chamber 8 is sent back to the second chamber 8. The air is conducted to the air pipe 16.5 through the air tube which is fastened to the central section of the Y-tube. As the air flows along the easier route upwards along the pipe, a sucking effect is created at the Y-tube also which carries along the settling sludge. An aeration tube is connected to the overflow pipe 17 entering from the second chamber 8. The described solution increases the efficiency of waste water treatment.

Overflow pipe 17 for conducting water from the second chamber 8 into the third chamber 9 comprises a pipe 17.1 which rests on the curved inclining partition wall 6 in the third chamber 9, an elbow 17.2 which is connected to the top part of the pipe 17.1 and which extends through the partition wall 6 into the second chamber 8, and a overflow pipe detail 17.3 which is fixed to the bottom section and which enlarges the diameter.

The overflow pipe 17 for conducting treated water from the second chamber 8 into the third chamber 9 passes through the inclining partition wall 6, while the end of the pipe that remains in the second chamber 8 is directed towards the bottom at the angle of about 90 degrees in respect of the bottom. The overflow pipe 17 advances through the partition wall 6 and at an angle, downwards along the partition wall 6.

The diameter of the overflow pipe is enlarged at the bottom section by means of a overflow pipe detail 17.3. The aim of the described construction is to conduct water from the second chamber 8 straight to the mouth of the air pipe 16 with the Y-tube 16.5 in the third or settling chamber 9. The height of the inlet of the overflow pipe 17 from the bottom of the second chamber 8 is within the range of about 300-600 mm, preferably about 400-500 mm. The described construction increases the efficiency of the treatment plant.

The angle α 18 denoting the inclination of the curved partition wall 6, which separates the second chamber 8 from the third chamber 9, is about 45-80 degrees, preferably 55-65 degrees, which ensures an improved water circulation and aeration in the second chamber 8 and the third chamber 9 compared to the solutions known in the art. The curved shape of the partition wall 6 improves the circulation of treated water.

The partition wall 6 separates the second or the central aeration chamber 8 from the final chamber 9, which is a chamber for treated water. The inclination angle 18 improves water circulation and aeration in the second chamber 8 and the third chamber 9. The partition wall between the second chamber 8 and the third chamber 9 is a funnel-shaped wall with an inward curving, which ensures better circulation of air and water. The curvature of the partition wall 6 from the edge to the deepest point is within the range of 400-750 mm, preferably 550-650 mm. The described solution increases the efficiency of waste water treatment.

The partition walls 5 and 6 and the corner levellings 13.1 and 13.2 at the junctions of the bottom of the tank 1 are preferably rounded, for example laminated. The rounded corners between the partition walls of the second chamber 8 and the bottom of the tank 1 prevent the sludge from settling in the corners, which makes the maintenance of the biological treatment plant much easier than the maintenance of the known plants.

During the flow from the first chamber 7 to the second chamber 8, the settled effluent is conducted to the treatment chamber 8 through the through-flow pipe 14 with its inlet in the first chamber 7 at the 90-degree angle in relation to the bottom of the tank 1, which prevents the transfer of particles floating on the surface to the second or the aeration chamber 8. From the through-flow pipe 14, water exits through the outlet at the height of about 300-500 mm above the bottom of the tank 1. The preferred height of the outlet is about 380-420 mm from the bottom of the tank. The described through-flow system minimizes the transfer of the floating effluent to the second chamber 8, which facilitates the operation of the biological treatment plant by making its cleaning easier and reducing the formation of sludge, thus also solving the problem of frequent maintenance and treatment efficiency.

Through the aeration inlet 4 three tubes enter the tank 1 that are connected, respectively, to the end of the air inlet 1.2 for aeration of the effluent, to the end of the air inlet 16.8 for forming the sludge lift, and to the air inlet 15.3.

## Claims

1. A multi-chamber biological treatment plant comprises a tank (1), maintenance shafts (2 and 3), chambers (7, 8, 9) of the tank (1) and partition walls (5 and 6), **characterized in that** the approximate diameter of the plant being between 1100 and 1700 mm, the chambers (7, 8, 9) are arranged next to each other in horizontal direction, the tank (1) is a horizontal cylindrical tank with an inclining and curved partition wall (6) between the second chamber (8) and the third chamber (9) of the tank (1), wherein the partition wall (6) is a funnel-shaped partition wall which curves inward and the curvature of the partition wall from the edge to the deepest point is within the range of 400-750 mm and the angle α (18) denoting the inclination of the partition wall (6) is 45-80 degrees and wherein the tank comprises a system of purification pipes, which is formed of a through-flow pipe (14) for conducting water from the first (7) to the second (8) chamber, a U-shaped through-flow pipe (15) for sending the sludge floating on the water surface in the third chamber (9) back to the second chamber (8), a sludge lift for conducting sludge from the third chamber (9) back to the second chamber (8) and an overflow pipe (17) for conducting water from the second chamber (8) into the third chamber (9) and with a height of the inlet of the overflow pipe (17) from the bottom of the second chamber (8) of 300-600 mm and the overflow pipe (17) comprising a pipe (17.1) resting on the partition wall (6) in the third chamber (9), an elbow (17.2) connected to the upper section of the pipe (17.1) and extending through the partition wall (6) into the second chamber (8), and a transition detail (17.3) which is fixed to the lower part of the pipe (17.1) and which enlarges the diameter; and wherein the corners (13.1 and 13.2) at the junction of the partitions walls (5 and 6) and the bottom of the body of the tank (1) have been levelled to be rounded; and wherein there is a diffuser (12) at the bottom of the second chamber (8) with an air inlet (12.1).

2. The multi-chamber biological treatment plant according to claim 1, **characterized in that** the through-flow pipe (14) comprises a T-piece (14.1), an elbow (14.2) connected to the horizontal section of the said T-piece, and a straight pipe (14.3) connected to the vertical section of the said T-piece, which it is fastened to the partition wall (5) so that one end of the elbow (14.2) extends to the first chamber (7) with its opening towards the bottom and the vertical section of the T-piece (14.1) extends to the chamber (8), and one of the openings of the vertical section is directed to the bottom of the tank (1) and the other opening is directed upwards.

3. The multi-chamber biological treatment plant according to claim 1, **characterized in that** the height of the outlet of the overflow pipe (14) is about 300-500 mm from the bottom of the tank (1).

4. The multi-chamber biological treatment plant according to claim 1, **characterized in that** the through-flow pipe (15) rests on the central section of the partition wall (6) in the chamber (9) and comprises a V-shaped pipe with its one end (15.1) extending through the partition wall (6) into the chamber (8) and the other end (15.2) extending upwards in the central part of the chamber (9), while an air inlet (15.3) is provided in the central section.

5. The multi-chamber biological treatment plant according to claim 1, **characterized in that** the sludge lift extends along the water surface level through the upper section of the three chambers and it comprises a horizontal pipe (16), a T-piece (16.1) provided at one end of the said pipe, an end (16.2), a T-piece (16.3) provided at the end extending through the partition wall (6) into the third chamber (9), a pipe (16.4) which is substantially parallel with the inclining partition wall (6) and connected to the T-piece (16.3), and a Y-tube (16.5) with an air inlet (16.8) connected to the end of the pipe (16.4) which is towards the bottom.

6. The multi-chamber biological treatment plant according to claim 1, **characterized in that** the sludge lift ends at the height of about 20-100 mm from the bottom of the tank (1).

## Patentansprüche

1. Eine biologische Kläranlage mit mehreren Kammern, bestehend aus einem Tank (1), Wartungsschachten (2 und 3), Kammern (7, 8, 9) des Tanks (1) und Trennwänden (5 und 6), **dadurch gekennzeichnet, dass** der ungefähre Durchmesser der Anlage zwischen 1.100 und 1.700 mm liegt, die Kammern (7, 8, 9) nebeneinander in horizontaler Ausrichtung angeordnet sind, der Tank (1) ein horizontaler, zylinderförmiger Tank mit einer geneigten und gebogenen Wand (6) zwischen der zweiten Kammer (8) und der dritten Kammer (9) des Tanks ist (1), wobei die Trennwand (6) eine trichterförmige Trennwand ist, die sich nach innen wölbt und sich die Wölbung der Trennwand von der Ecke zum tiefsten Punkt innerhalb eines Bereichs von 400 - 750 mm befindet und der Winkel α (18), der die Wölbung der Trennwand (6) kennzeichnet, 45 - 80 Grad beträgt, und wobei der Tank ein System an Reinigungsrohren umfasst, das aus einem Durchflussrohr (14) zur Durchleitung von Wasser aus der ersten (7) zur zweiten (8) Kammer, einem U-förmigen Durchflussrohr (15) zur Überführung des aufschwimmenden Klärschlamms an der Wasseroberfläche in die dritte Kammer (9) zurück zur zweiten Kammer (8), einer Klärschlammhebevorrichtung zur Durchleitung des Klärschlamms aus der dritten Kammer (9) zurück zur zweiten Kammer (8) und einem Überlaufrohr (17) zur Durchleitung von Wasser aus der zweiten Kammer (8) in die dritte Kammer (9), mit einer Höhe des Einlasses des Überlaufrohrs (17) vom Boden der zweiten Kammer (8) von 300 - 600 mm, und dem Überlaufrohr (17), bestehend aus einem Rohr (17.1), das auf der Trennwand (6) in der dritten Kammer (9) liegt, einem Winkel (17.2), der mit dem oberen Bereich des Rohres (17.1) verbunden ist und durch die Trennwand (6) in die zweite Kammer (8) führt, sowie einem Übergangsteil (17.3), das an das untere Teil des Rohres (17.1) angebracht ist und welches den Durchmesser erweitert, geformt ist; und wobei die Ecken (13.1 und 13.2) an der Verbindungstelle der Trennwände (5 und 6) und der Boden des Tanks (1) nivelliert wurden, um rund zu sein; und wobei ein Diffusor (12) am Boden der zweiten Kammer (8) mit einem Lufteinlass (12.1) vorhanden ist.

2. Die biologische Kläranlage mit mehreren Kammern gemäß Anspruch 1, **dadurch gekennzeichnet, dass** das Durchflussrohr (14) aus einem T-Stück (14.1), einem Winkel (14.2), das mit dem horizontalen Abschnitt des besagten T-Stücks verbunden ist, und einem geraden Rohr (14.3), das mit dem vertikalen Abschnitt des besagten T-Stücks, welches an der Trennwand (5) angebracht ist, verbunden ist, sodass sich ein Ende des Winkels (14.2) in die erste Kammer (7) mit seiner Öffnung in Richtung Boden und sich der vertikale Abschnitt des T-Stücks (14.1) zur Kammer (8) erstreckt, und eine der Öffnungen des vertikalen Abschnitts auf den Boden des Tanks (1) ausgerichtet ist und die andere Öffnung nach oben zeigt.

3. Die biologische Kläranlage mit mehreren Kammern gemäß Anspruch 1, **dadurch gekennzeichnet, dass** die Höhe des Auslasses des Überlaufrohrs (14) ungefähr 300 - 500 mm vom Boden des Tanks (1) entfernt ist.

4. Die biologische Kläranlage mit mehreren Kammern gemäß Anspruch 1, **dadurch gekennzeichnet, dass** das Durchflussrohr (15) auf dem Mittelabschnitt der Trennwand (6) in der Kammer (9) liegt und aus einem V-förmigen Rohr, das mit einem Ende (15.1) durch die Trennwand (6) in die Kammer (8) und mit dem anderen Ende (15.2) nach oben in den Mittelabschnitt der Kammer (9) reicht, während ein Lufteinlass (15.3) im Mittelabschnitt vorhanden ist.

5. Die biologische Kläranlage mit mehreren Kammern gemäß Anspruch 1, **dadurch gekennzeichnet, dass** die Klärschlammhebevorrichtung entlang der Wasseroberfläche durch den oberen Abschnitt der drei Kammern verläuft und aus einem horizontalen Rohr (16), einem T-Stück (16.1), das an einem Ende des besagten Rohres angebracht ist, einem Ende (16.2), einem T-Stück (16.3), das am Ende durch die Trennwand (6) in die dritte Kammer (9) reicht, einem Rohr (16.4), das im Wesentlichen parallel zur geneigten Trennwand (6) verläuft und mit dem T-Stück (16.3) verbunden ist, und einem Y-Rohr (16.5) mit einem Lufteinlass (16.8), das mit dem Ende des Rohrs (16.4) verbunden ist und in Richtung Boden zeigt, besteht.

6. Die biologische Kläranlage mit mehreren Kammern gemäß Anspruch 1, **dadurch gekennzeichnet, dass** die Klärschlammhebevorrichtung in einer Höhe von ungefähr 20-100 mm vom Boden des Tanks (1) endet.

## Revendications

1. Une installation de traitement biologique à plusieurs chambres comprend un réservoir (1), des puits de maintenance (2 et 3), des chambres (7, 8, 9) du réservoir (1) et des parois de séparation (5 et 6), **caractérisé en ce que** le diamètre approximatif de la station se situe entre 1100 et 1700 mm, les chambres (7, 8, 9) sont disposées l'une à côté de l'autre dans le sens horizontal, le réservoir (1) est un réservoir cylindrique horizontal avec une paroi de séparation (6) inclinée et incurvée entre la deuxième chambre (8) et la troisième chambre (9) du réservoir (1), dans lequel la paroi de séparation (6) est une paroi de séparation en forme d'entonnoir qui s'incurve vers l'intérieur et la courbure de la paroi de séparation du bord au point le plus profond est dans la plage de 400-750 mm et l'angle α (18) indiquant l'inclinaison de la paroi de séparation (6) est de 45-80 degrés et dans lequel le réservoir comprend un système de tuyaux de purification, qui est formé d'un tuyau d'écoulement (14) pour conduire l'eau de la première (7) à la seconde (8) chambre, un tuyau d'écoulement en forme de U (15) pour renvoyer la boue flottant à la surface de l'eau dans la troisième chambre (9) vers la deuxième chambre (8), un élévateur de boue pour ramener la boue de la troisième chambre (9) à la deuxième chambre (8) et un tuyau de débordement (17) pour conduire l'eau de la deuxième chambre (8) dans la troisième chambre (9) et avec une hauteur de l'entrée du tuyau de débordement (17) par rapport au fond de la deuxième chambre (8) de 300-600 mm et le tuyau de débordement (17) comprenant un tuyau (17.1) reposant sur la paroi de séparation (6) dans la troisième chambre (9), un coude (17.2) relié à la partie supérieure du tuyau (17.1) et s'étendant à travers la paroi de séparation (6) dans la deuxième chambre (8), et un élément de transition (17.3) qui est fixé à la partie inférieure du tuyau (17.1) et qui élargit le diamètre ; et dans lequel les coins (13.1 et 13.2) à la jonction des parois de séparation (5 et 6) et le fond du corps du réservoir (1) ont été nivelés pour être arrondis; et dans lequel il y a un diffuseur (12) au fond de la deuxième chambre (8) avec une entrée d'air (12.1).

2. Installation de traitement biologique multichambre selon la revendication 1, **caractérisée en ce que** le tuyau de passage (14) comprend une pièce en T (14.1), un coude (14.2) relié à la section horizontale de ladite pièce en T, et un tuyau droit (14.3) relié à la section verticale de ladite pièce en T, qu'il est fixé à la paroi de séparation (5) de sorte qu'une extrémité du coude (14.2) s'étende jusqu'à la première chambre (7) avec son ouverture vers le bas et la section verticale de la pièce en T (14.1) s'étende jusqu'à la chambre (8), et l'une des ouvertures de la section verticale est dirigée vers le fond du réservoir (1) et l'autre ouverture est dirigée vers le haut.

3. Installation de traitement biologique à plusieurs chambres selon la revendication 1, **caractérisée en ce que** la hauteur de la sortie du tuyau de trop-plein (14) est d'environ 300-500 mm à partir du fond de la cuve (1).

4. Installation de traitement biologique à plusieurs chambres selon la revendication 1, **caractérisée en ce que** le tuyau d'écoulement (15) repose sur la section centrale de la paroi de séparation (6) dans la chambre (9) et comprend un tuyau en forme de V dont une extrémité (15.1) s'étend à travers la paroi de séparation (6) dans la chambre (8) et l'autre extrémité (15.2) s'étend vers le haut dans la partie centrale de la chambre (9), tandis qu'une entrée d'air (15.3) est prévue dans la section centrale.

5. Installation de traitement biologique à plusieurs chambres selon la revendication 1, **caractérisée en ce que** l'élévateur de boues s'étend le long du niveau de la surface de l'eau à travers la section supérieure des trois chambres et il comprend un tuyau horizontal (16), une pièce en T (16.1) prévue à une extrémité dudit tuyau, une extrémité (16.2), une pièce en T (16.3) prévue à l'extrémité s'étendant à travers la paroi de séparation (6) dans la troisième chambre (9), un tuyau (16.4) qui est sensiblement parallèle à la paroi de séparation inclinée (6) et relié à la pièce en T (16.3), et un tuyau en Y (16.5) avec une entrée d'air (16.8) reliée à l'extrémité du tuyau (16.4) qui est vers le bas.

6. Installation de traitement biologique à plusieurs chambres selon la revendication 1, **caractérisée en ce que** l'élévateur de boue se termine à une hauteur d'environ 20 à 100 mm du fond de la cuve (1).
